(19) Europäisches Patentamt

European Patent Office

Office européen des brevets

(11) **EP 1 223 758 B1**

(12) **EUROPEAN PATENT SPECIFICATION**

(45) Date of publication and mention
of the grant of the patent:
**08.03.2006 Bulletin 2006/10**

(51) Int Cl.:
*H04N 7/24* (2006.01)      *G11B 27/034* (2006.01)
*G11B 27/10* (2006.01)      *G11B 27/32* (2006.01)

(21) Application number: **02250074.8**

(22) Date of filing: **07.01.2002**

(54) **Recording medium with content stream data recorded thereon, recording apparatus, and reproducing apparatus therefor**

Aufzeichungsmedium mit aufgezeichnetem Inhalts-Datenstrom, und Aufzeichnungs- / Wiedergabegerät

Support d'enregistrement avec un flot de contenu, appareil d'enregistrement d'informations, et appareil de reproduction d'informations

(84) Designated Contracting States:
**DE FR GB NL**

(30) Priority: **10.01.2001 KR 2001001233**
**18.01.2001 US 262104 P**

(43) Date of publication of application:
**17.07.2002 Bulletin 2002/29**

(73) Proprietor: **SAMSUNG ELECTRONICS CO., LTD.**
**Suwon-City, Kyungki-do (KR)**

(72) Inventors:
• **Yoon, Bum-sik,**
**407-1702 Jeongdeun Maeul**
**Seongnam-si,**
**Gyeonggi-do (KR)**
• **Park, Sung-wook**
**Seocho-gu,**
**Seoul (KR)**

(74) Representative: **Robinson, Ian Michael et al**
**Appleyard Lees,**
**15 Clare Road**
**Halifax HX1 2HY (GB)**

(56) References cited:
**EP-A- 1 005 044**       **EP-A- 1 051 027**
**WO-A-00/14744**        **WO-A-00/68946**
**WO-A-01/54126**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**EP 1 223 758 B1**

**Description**

The present invention relates to recording and reproducing content stream data, and more particularly, to a recording medium with content stream data recorded thereon, a recording apparatus, and a reproducing apparatus therefor.

A single piece of any of various forms of content, such as a movie, a music track, etc., is referred to as a program in this specification.

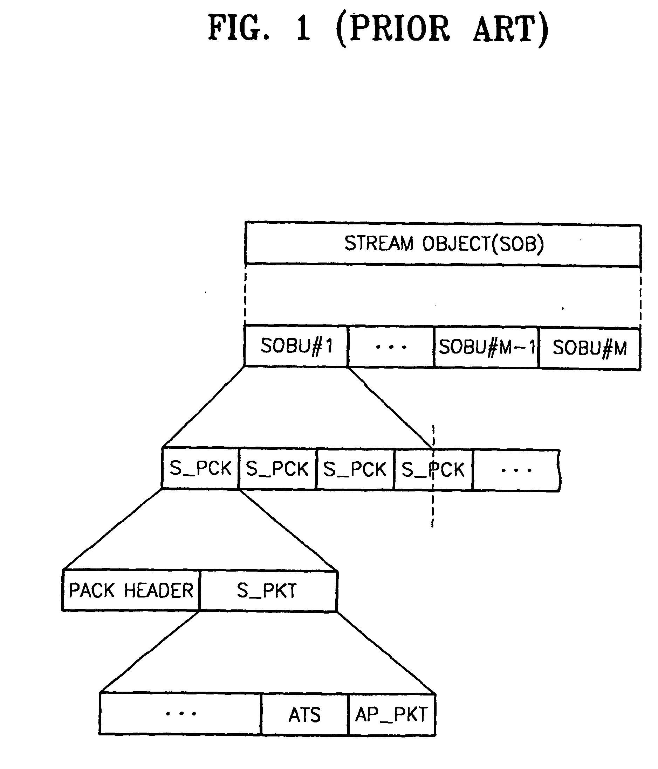

Figure 1 shows the data structure of a conventional program.

Generally, content stream data of a program is formed by one stream object (SOB). Referring to Figure 1, an SOB is formed of a chain in which one or more Stream Object Units (SOBUs) are linked. SOBUs are units in which data is recorded and edited. However, since the input and/or output speeds of data streams of a program can change in recording and/or reproducing, the corresponding SOBU lengths on a time axis can differ from one another. An SOBU includes a plurality of stream packs. SOBUs included in the same SOB include the same number of stream packs.

A stream pack is formed by a pack header and a stream packet. A stream packet contains one or more application packets (AP_PKTs). An application packet is a piece of a bit stream which is input when a recording apparatus records data, or output when a reproducing apparatus reproduces data. Therefore, in front of an application packet an Application Time Stamp (ATS) is located. An ATS is reproducing time information of the application packet following of the ATS. The start and end of an application packet may not match the start and end of the stream pack. That is, an application packet can stretch over the boundary between two stream packs, i.e., two neighboring SOBUs.

Meanwhile, to arbitrarily access a program recorded as shown in Figure 1, search information which is separately made is generally used. Search information can include information on the location of certain data in a program, program reproducing time information, and program recording time information. Search information can have various formats depending on applications, however, to reduce the amount of information and enable quick search, a hierarchical structure is frequently used to search for data in the program.

If search information of a program is formed of three layers: a cell layer, an SOB layer, and an SOBU layer, the search information includes information on which cell or cells correspond to a given program, information on which SOB or SOBs correspond to a given cell, and information on which SOBU or SOBUs correspond to a given SOB. Particularly, information on which SOBU or SOBUs correspond to a given SOB is referred to as a MAPping List (MAPL).

A mapping list contains an incremental application packet arrival time (IAPAT), which indicates the duration of a corresponding SOBU. The arrival time of an application packet contained in the corresponding SOBU is needed for obtaining an IAPAT. However, for determining the IAPAT of SOBUs, different methods are used depending on the location of the SOBU in an SOB, that is, depending on whether or not the SOBU is the last SOBU in the SOB.

For example, when an SOB includes M SOBUs, a value obtained by accumulating IAPATs of the first SOBU through the i-th SOBU, excluding the last SOBU, should be less than a value obtained by adding 1 to the arrival time of the first application packet of SOBU (i+1). At this time, it is assumed that an IAPAT is an integer expressed in units of 1.0, and the initial value of accumulation is 0. This is expressed by the following relation:

$$\mathrm{SOBU\_S\_APAT(i+1)} \leq \mathrm{SUM\_IAPAT(i)} < \mathrm{SOBU\_S\_APAT(i+1)+1}$$

Here, SOBU_S_APAT(i+1) denotes the arrival time of the first application packet and SUM_IAPAT(i) denotes a value obtained by accumulating IAPAT values of all the preceding SOBUs and the current SOBU #i.

If an SOB includes M SOBUs, a value obtained by accumulating the first through the M-th IAPAT should be greater than the arrival time of the last application packet but greater by less than 1. At this time, it is assumed that the IAPATs are all integers expressed in units of 1.0, and the initial value of accumulation is 0.

Also, for SOBU #M, a value obtained by accumulating IAPATs of the first SOBU through SOBU #M should be greater than the arrival time of the last application packet included in SOBU #M, and should be less than or equal to a value obtained by adding 1 to the arrival time of the last application packet included in SOBU #M. This is expressed by the following relation:

$$\mathrm{SOBU\_E\_APAT(M)} < \mathrm{SUM\_IAPAT(M)} \leq \mathrm{SOBU\_E\_APAT(M)+1}$$

Here, SOBU_E_APAT (M) denotes the arrival time of the last application packet included in SOBU #M.

Meanwhile, the size of an application packet (AP_PKT_SZ) satisfies AP_PKT_SZ $\leq 2018$ x [SOBU_SZ] - 2.

Here, SOBU_SZ denotes the size of an SOBU. This expression is made considering that at least 30 bytes are needed for a pack header and 2 bytes are needed for a header extension and a stuffing packet defined in a stream packet, assuming that one SOBU has a number of stream packs equal to the number of SOBU_SZs. That is, it is because the maximum area for application packets is the result of subtracting 30 bytes from 2048 bytes for one SOBU and then again subtracting 2 bytes from the resulting 2018 bytes.

However, according to the above scope of the size of an application packet, a case where no ATS exists in an SOBU occurs.

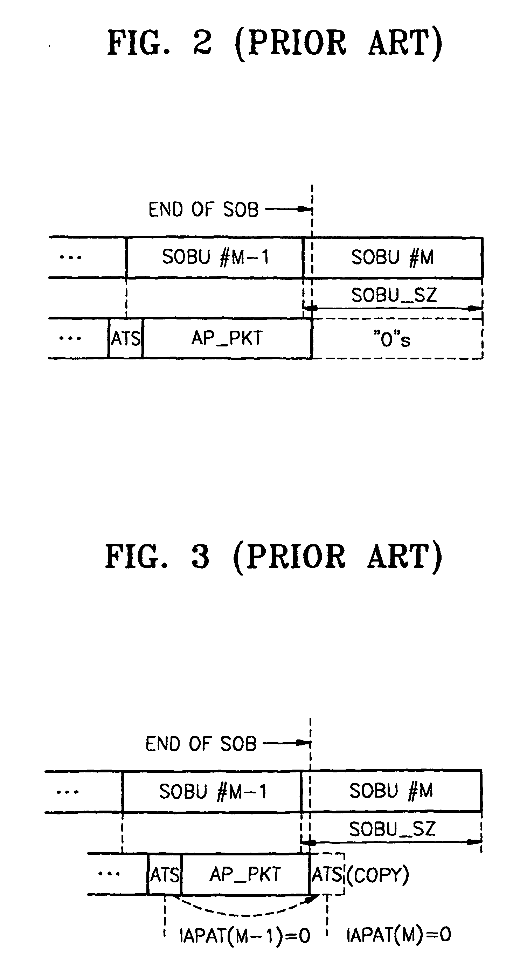

Figure 2 illustrates a case where there is no application time stamp (ATS) in a stream object unit (SOBU) .

If the last stream pack contained in an SOB is located as shown in Figure 2, the first byte forming an ATS is not included in SOBU #M-1, and since only a part of an application packet formed in the last stream pack is located in SOBU #M, there is no ATS included in SOBU #M and SOBU #M-1.

Thus, according to the size of the application packet, a case where there is no corresponding ATS, such as in SOBU #M-1 and SOBU #M, occurs. The IAPAT for an SOBU which has no corresponding ATS cannot be obtained, and therefore, a mapping list formed of the IAPATs as search information cannot be obtained. Accordingly, it is impossible to search for a program.

Particularly, it is prescribed that in a case where the last SOBU of an SOB does not have a corresponding ATS, the IAPAT be obtained using a copy of the ATS of the last application packet. However, according to the rule for obtaining IAPATs, the IAPAT(M-1) for SOBU #M-1, and IAPAT(M) for SOBU #M are both "0", and therefore, a program search based on a mapping list formed of IAPAT cannot be carried out correctly. IAPAT(i) should meet the following conditions:

$$1 <= IAPAT(i) < 2^{12}, \; i=1$$

$$1 <= IAPAT(i) < 2^{12} -1, \; 1<i<M$$

$$0 <= IAPAT(i) < 2^{12} -1, \; i=M$$

However, referring to Figure 3, IAPAT(M-1) is "0" and does not satisfy the conditions.

It is an aim of the present invention to provide a recording medium with content stream data recorded thereon such that program searching can be correctly performed, and to provide a recording apparatus and a reproducing apparatus therefor.

WO-A-01/54126 discloses a method for recording and playback of DVD Stream Recording (DVD-SR) which addresses a problem arising in relation to low bit rate data streams. In this case, stuffing packets are recorded with a null data content (e.g. a value of zero) for filling the application data area of each application packet. This document falls under Article 54(3) EPC.

According to the present invention there is provided a recording medium as set forth in claim 1 appended hereto.

Also according to the present invention there is provided a recording apparatus as set forth in claim 8 appended hereto.

Further according to the present invention there is provided a reproducing apparatus as set forth in claim 15 appended hereto.

Preferred features of the present invention are set forth in the dependent claims, or will be apparent from the description which follows.

For a better understanding of the invention, and to show how embodiments of the same may be carried into effect, reference will now be made, by way of example, to the accompanying diagrammatic drawings in which:

Figure 1 shows the data structure of a conventional program;

Figure 2 illustrates a case where there is no Application Time Stamp (ATS) in a stream object unit (SOBU);

Figure 3 illustrates the conventional method for obtaining IAPAT in a case where there is no ATS included in the last SOBU;

Figure 4 is the data structure according to a first embodiment of the present invention;

Figure 5 is the data structure according to a second embodiment of the present invention;

Figure 6 is a block diagram of a recording apparatus according a preferred embodiment of the present invention;

Figure 7 is a block diagram of a reproducing apparatus according a preferred embodiment of the present invention; And

Figure 8 is a block diagram of a recording and reproducing apparatus according a preferred embodiment of the present invention.

A recording medium of the preferred embodiment is a re-writable recording medium, and a user can record and edit a program formed of content stream data. Recording content stream data involves recording input content stream data as it is without encoding. That is, audio or video stream data such as music or movies is received, buffered, packed in predetermined units for recording, and recorded on the recording medium.

A Digital Versatile Disc-Stream Recording (DVD-SR) medium, which is a recording medium according to the present embodiment, includes a program recorded in a stream object (SOB), and search information for program navigation.

Here, as in the prior art, the SOB is a program, such as music or a movie, which is recorded in the form of content stream data, and includes one or more stream packs (S_PCK). An SOB is formed of one or more Stream Object Units (SOBUs) which are connected as a chain. An SOBU is a unit for recording and/or editing and has a predetermined size of data. However, since the input and/or output speed of data streams forming a program may change when data is recorded and/or reproduced, the length of an SOBU along a time axis may change. An SOBU includes a plurality of stream packs. All SOBUs contained in the same SOB have the same number of stream packs.

A stream pack is formed by a pack header and a stream packet. A stream packet contains one or more application packets (AP_PKT). An application packet (AP_PKT) is a piece of a bit stream which is input when a recording apparatus records data, or output when a reproducing apparatus reproduces data. A time stamp (ATS) is located in front of an application packet. The ATS is reproducing time information of the application packet located just behind the ATS.

Meanwhile, search information has a hierarchical structure containing information on which cell corresponds to a given program, which SOB corresponds to a given cell, and which SOBU corresponds to a given SOB. Particularly, information on which SOBU corresponds to an SOB is referred to as a MAPping List (MAPL). A mapping list contains an incremental application packet arrival time (IAPAT) indicating the duration of a corresponding SOBU. A rule for obtaining an IAPAT will be explained later.

According to the present invention, each of the SOBUs, excluding the last SOBU, contained in a predetermined SOB has at least one entire ATS. That is, the first byte of at least one ATS is contained in a corresponding SOBU. This is because the size of an application packet according to the present invention satisfies the following expression:

$$\text{AP\_PKT\_SZ} \leq 2018 \times [\text{SOBU\_SZ}] - 6$$

In particular, when the number of stuffing bytes N_SByte in an SOBU is 0, the following relation is satisfied:

$$\text{AP\_PKT\_SZ} \leq 2018 \times [\text{SOBU\_SZ}] - 5$$

That is, as described in the explanation of the prior art, considering that at least 30 bytes are needed for a pack header and 2 bytes are needed for a header extension and a stuffing packet defined in a stream packet, assuming that one SOBU has a number of stream packs equal to the number of SOBU_SZs, 2018 x [SOBU_SZ]-2 is the remaining area. However, considering the size of an ATS is 4 bytes, if the size of an application packet is made to be less than or equal to 2018*[SOBU_SZ] - 6, then each of all SOBUs excluding the last SOBU contains the first byte of at least one ATS.

If the expression is generalized, the resulting expression is:

$$AP\_PKT\_SZ \leq SPayload\_SZ \times [SOBU\_SZ] - [N\_AHE + N\_SByte + ATS\_SZ]$$

Here, ATS_SZ denotes the byte size of an ATS, SPayload_SZ denotes the size of data space for containing information, excluding a fixed header area from S_PCK, N_AHE denotes the number of application header extensions of a corresponding SOBU, and N_SByte denotes the number of stuffing bytes of a corresponding SOBU.

A first embodiment of a data structure for making the last SOBU have an IAPAT will now be explained.

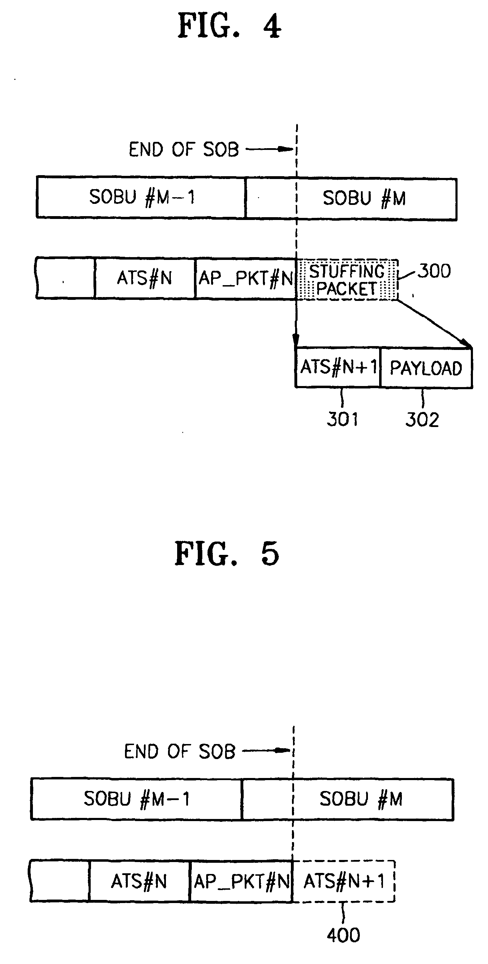

Referring to Figure 4, an SOB is formed of an SOBU chain, in which M SOBUs are connected. Since the size of an application packet is as described above according to the present invention, each of the SOBUs excluding the last SOBU contains the first byte of at least one ATS. That is, SOBU #M-1 contains the first byte of ATS #N.

Meanwhile, SOBU #M does not contain an ATS, but contains all or part of application packet AP_PKT #N. That is, when there is no ATS contained in the last SOBU, SOBU #M, a stuffing packet 300 for correction is recorded after the last application packet AP_PKT #N, according to the present embodiment. The stuffing packet 300 for correction is formed of ATS #N+1 301 and a payload 302. Here, ATS #N+1 301 has a value obtained by adding the integer "1" to ATS #N. This is expressed by the following equation:

$$ATS\ (\#N+1) = ATS\ (\#N) + 1$$

Here, if ATS #N is an integer, ATS #N+1 is also an integer. ATS #N+1 301 may be recorded as a value obtained by adding an integer to ATS #N. In the payload 302, "0" is recorded, according to the present embodiment. However, since an SOB actually ends at the last application packet AP_PKT #N, and when the SOB is reproduced data recorded after AP_PKT #N that is the last application packet is not read, the format and content of data recorded in the payload 302 may change in a variety of ways when necessary. In some cases, there may be no data recorded in the payload 302.

Next, a data structure for making the last SOBU have an IAPAT according a second embodiment of the present invention will be explained.

Figure 5 shows the data structure according to the second embodiment of the present invention.

Referring to Figure 5, an SOB is formed of an SOBU chain, in which M SOBUs are connected. Since the size of an application packet is as described above according to the present invention, each of the SOBUs excluding the last SOBU contains the first byte of at least one ATS. That is, SOBU #M-1 contains the first byte of ATS #N.

At this time, as described above referring to Figure 4, ATS #N+1 has a value obtained by adding the integer "1" to ATS #N, but is not actually recorded. That is, in calculating an IAPAT value required for recording a mapping list as search information, recorded ATS #N+1 is not actually read, but ATS #N is read and then a value obtained by adding "1" to ATS #N is just regarded as ATS #N+1. However, the IAPAT obtained by regarding the value obtained by adding "1" to ATS #N as ATS #N+1 is recorded in the mapping list as search information. Meanwhile, as in the first embodiment, ATS #N+1 may be a value obtained by adding an integer to ATS #N. At this time, if ATS #N is an integer, ATS #N+1 is also an integer.

According to the first and second embodiments of the present invention described above referring to Figures 4 and 5, the first ATS of SOBU #M-1 is ATS #N and the first ATS of SOBU #M is ATS #N+1. Since the first ATSs are different, the IAPAT of the (M-1)-th SOBU is not "0". That is, the IAPAT values of all SOBUs can be correctly obtained. Therefore, since each SOBU has an IAPAT value which can be distinguished from other IAPAT values, program searching referring to a mapping list can be performed smoothly without an error.

Meanwhile, the rule for obtaining an IAPAT is as follows. For i-th SOBU, SOBU(i), excluding SOBU #M, when an SOB contains M SOBUs, a value obtained by accumulating IAPATs from the first IAPAT, IAPAT(1) to the i-th IAPAT, IAPAT(i), should be greater than or equal to the arrival time of the first application packet of SOBU(i+1), and less than a value obtained by adding "1" to the arrival time of the first application packet of SOBU(i+1). At this time, an IAPAT has an integer value and the initial value of an IAPAT is "0". This can be expressed as follows:

$$SOBU\_S\_APAT(i+1) \leq SUM\_IAPAT(i) < SOBU\_S\_APAT(i+1) + 1$$

Here, SOBU_S_APAT(i+1) denotes the arrival time of the first application packet contained in SOBU #i+1, and SUM_IAPAT(i) denotes a value obtained by accumulating the IAPATs of SOBU#i and all preceding SOBUs.

Also, as for SOBU #M, a value obtained by accumulating all IAPATs is greater than the arrival time of the last application packet contained in the SOBU #M, and less than or equal to a value obtained by adding "1" to the arrival time of the last packet contained in the SOBU #M. This can be expressed as follows:

$$\texttt{SOBU\_E\_APAT(M)} \ < \ \texttt{SUM\_IAPAT(M)} \ \leq \texttt{SOBU\_E\_APAT(M)} \ \texttt{+1}$$

Here, SOBU_E_APAT(M) denotes the arrival time of the last application packet contained in SOBU #M.

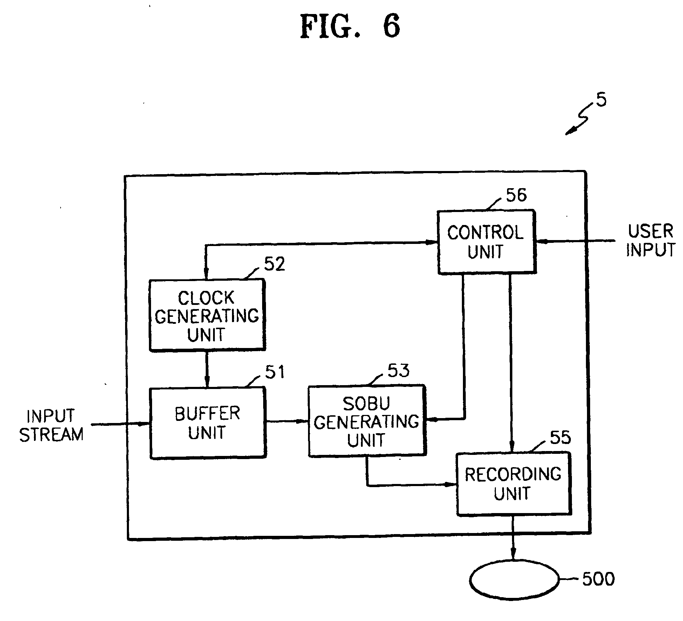

Figure 6 is a block diagram of a recording apparatus according to a preferred embodiment of the present invention.

Referring to Figure 6, the recording apparatus 5 records contents such as music or movies in one SOB having one of the data structures described above, and has a buffer unit 51, a clock generating unit 52, an SOBU generating unit 53, a recording unit 55, and a control unit 56. The buffer unit 51 receives content streams from the outside and outputs the content streams at an appropriate speed by buffering the content streams based on the clock values provided from the clock generating unit 52. The SOBU generating unit 53 generates SOBUs by packing content streams. The recording unit 55 records SOBUs and search information such as a mapping list on an optical recording medium 500 based on controls from the control unit 56. The control unit 56 generates a mapping list and provides the mapping list to the recording unit 55, while controlling the entire recording apparatus 5 so that content streams are recorded on the optical recording medium 500.

Based on the structure described above, a recording method according to a first embodiment of the present invention is explained below.

When content streams are input to the buffer unit 51 from an application apparatus such as a set-top-box, and a user pushes a recording button (not shown) of the recording apparatus 5, the control unit 56 resets the clock generating unit 52. Then, the clock generating unit 52 generates clock values from "0" and provides the clock values to the buffer unit 51.

The buffer unit 51 attaches the clock values received from the clock generating unit 52 to the received content streams, and outputs the received content streams at an appropriate speed by buffering the content streams. The SOBU generating unit 53 packs the content streams received from the buffer unit 51 into SOBUs . The generated SOBUs are transmitted to the recording unit 55, and the recording unit 55 records the received SOBUs on the optical recording medium 500 based on the controls from the control unit 56.

At this time, as shown in Figure 4, if SOBU #M-1, which is the second SOBU from the end of the SOB, contains at least one entire ATS, and SOBU #M, which is the last SOBU, does not contain an ATS, a stuffing packet 300 for correction is recorded continuously after the last application packet AP_PKT #N. A value obtained by adding the integer "1" to ATS #N is recorded as ATS #N+1 in the present embodiment. "0" is recorded in the payload according to the present embodiment.

Also, the recording unit 55 records the mapping list, provided from the control unit 56, as navigation data in a search information recording area of the optical recording medium 500.

A recording method according to a second embodiment of the present invention will now be explained.

When content streams are input to the buffer unit 51 from an application apparatus such as a set-top-box, and a user pushes a recording button (not shown) of the recording apparatus 5, the control unit 56 resets the clock generating unit 52. Then, the clock generating unit 52 generates clock values from "0" and provides the clock values to the buffer unit 51.

The buffer unit 51 attaches the clock values received from the clock generating unit 52 to the received content streams, and outputs the received content streams at an appropriate speed by buffering the content streams. The SOBU generating unit 53 packs the content streams received from the buffer unit 51, and generates SOBUs. The generated SOBUs are transmitted to the recording unit 55, and the recording unit 55 records the received SOBUs on the optical disc 500 based on the controls from the control unit 56.

Also, the recording unit 55 records the mapping list, provided from the control unit 56, as navigation data in a search information recording area of the optical recording medium 500. Here, the mapping list is generated by the control unit 56 and provided to the recording unit 55. More specifically, as shown in Figure 5, the control unit 56 reads ATS #N, regards a value obtained by adding "1" to ATS #N according to the present embodiment as ATS #N+1, and records an IAPAT value, which is obtained by the rule described above, based on ATS #N+1, in the mapping list. That is, ATS #N+1 has a value obtained by adding the integer "1" to ATS #N, but the value is not a value actually recorded as data, but a virtual value used by the control unit 56 in calculating an IAPAT value forming the mapping list. Meanwhile, ATS #N+1 may be a value obtained by adding an integer to ATS #N.

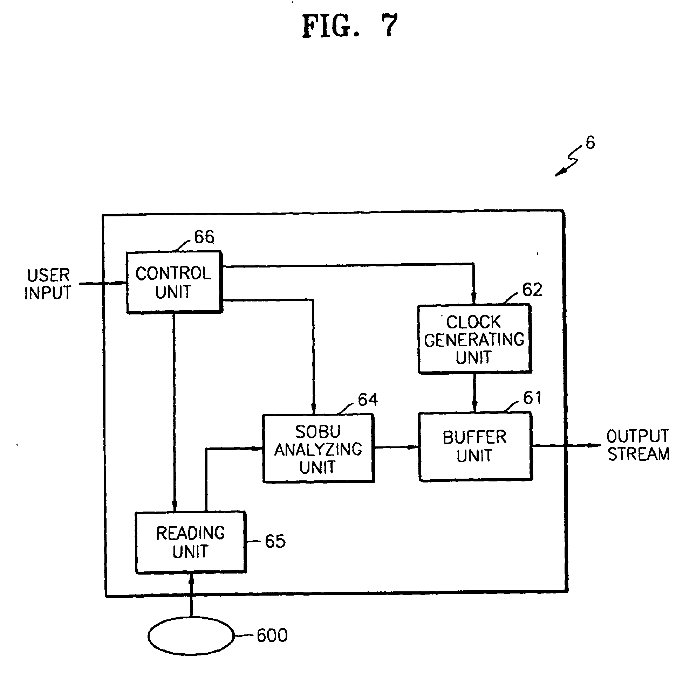

Figure 7 is a block diagram of a reproducing apparatus according to a preferred embodiment of the present invention.

Referring to Figure 7, the reproducing apparatus 6 reproduces contents from an optical recording medium 600 on which data having the data structure described referring to Figures 4 through 6 is recorded, and has a control unit 66, a reading unit 65, an SOBU analyzing unit 64, a clock generating unit 62, and a buffer unit 61.

The control unit decodes various control information including a mapping list and controls the entire reproducing apparatus so that contents recorded on the optical recording medium 600 can be reproduced based on user's requirements. The reading unit 65 reads data from the optical recording medium 600. The SOBU analyzing unit 64 extracts content stream data forming contents by analyzing read SOBUs, and outputs content stream data at an appropriate speed by buffering content stream data based on the clock values provided from the clock generating unit 62.

Based on the structure described above, a reproducing method according to a first embodiment of the present invention will now be explained.

If a user requests to reproduce predetermined contents by pushing a reproducing button (not shown) of the reproducing apparatus 6, the control unit 66 commands the reading unit 65 to read search information, including a mapping list, recorded on the optical recording medium 600, receives search information, including the mapping list, provided from the reading unit 65, and finds out the corresponding SOB or the corresponding SOBU. At this time, as shown in Figure 4, even if all of the SOBUs contained in the SOB, excluding the last SOBU, have at least one entire ATS and the last SOBU has no ATS, a stuffing packet 300 for correction, containing ATS #N+1 having a value obtained by adding the integer "1" to ATS #N following the last application packet AP_PKT #N, is recorded on the optical recording medium 600, and a mapping list having an IAPAT obtained based on the stuffing packet 300 for correction is recorded as search information. Therefore, searching for contents and reproducing desired contents once located can be smoothly performed.

Meanwhile, the control unit 66 resets the clock generating unit 62. Then, the clock generating unit 62 generates clock values from "0" and provides the clock values to the buffer unit 61.

The reading unit 65 reads recorded contents and provides the contents to the SOBU analyzing unit 64. The SOBU analyzing unit 64 extracts content stream data from the provided SOBU. The buffer unit 61 outputs the corresponding content stream data at a time when the clock value provided from the clock generating unit 62 becomes the same as the clock value attached to the received content stream data.

A reproducing method according to a second embodiment of the present invention will now be explained.

If a user requests to reproduce predetermined contents by pushing a reproducing button (not shown) of the reproducing apparatus, the control unit 66 commands the reading unit 65 to read search information, including a mapping list, recorded in the optical recording medium 600, receives search information, including the mapping list, provided from the reading unit 65, and finds out the corresponding SOB or the corresponding SOBU. At this time, as shown in Figure 5, even if all of the SOBUs contained in the SOB, excluding the last SOBU, have at least one entire ATS and the last SOBU has no ATS, a mapping list containing an IAPAT obtained by regarding ATS #N+1, which is obtained by adding the integer "1" to ATS #N, being included in SOB #M, is recorded as search information, and therefore searching for contents and reproducing desired contents can be performed.

Meanwhile, the control unit 66 resets the clock generating unit 62. Then, the clock generating unit 62 generates clock values from "0" and provides the clock values to the buffer unit 61.

The reading unit 65 reads recorded contents and provides the contents to the SOBU analyzing unit 64. The SOBU analyzing unit 64 extracts content stream from the provided SOBU. The buffer unit 61 outputs the corresponding content stream at a time when the clock value provided from the clock generating unit 62 becomes the same as the clock value attached to the received content stream data.

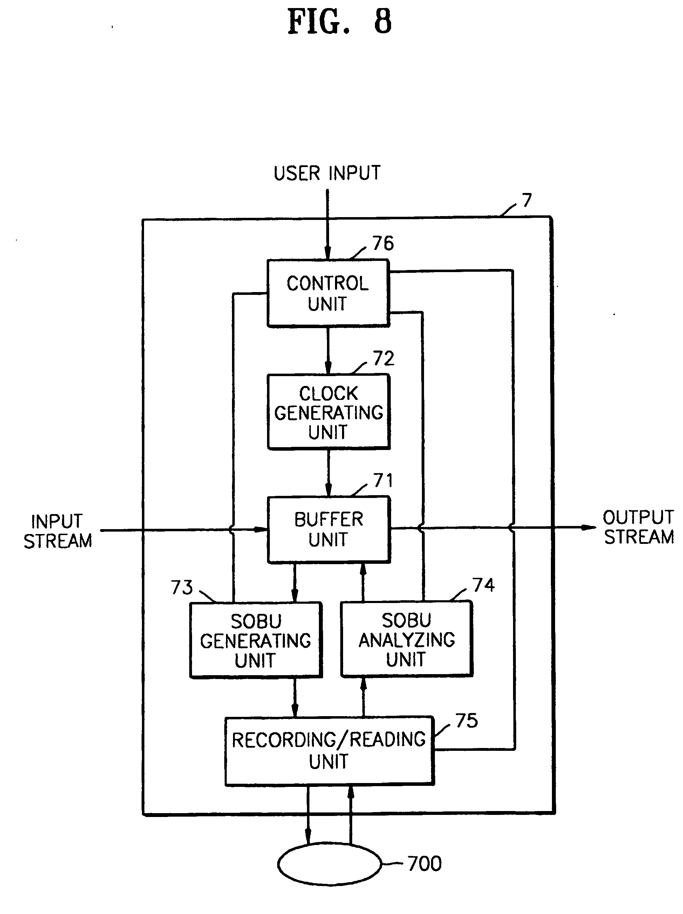

Figure 8 is a block diagram of a recording and reproducing apparatus according to a preferred embodiment of the present invention.

Referring to Figure 8, the recording and reproducing apparatus 7 is implemented by combining the recording apparatus 5 of Figure 6 and the reproducing apparatus 6 of Figure 7 in one unit, and has a recording/reading unit 75, an SOBU generating unit 73, an SOBU analyzing unit 74, a buffer unit 71, a clock generating unit 72, and a control unit 76, so that in recording, each piece of content such as music track or a movie is recorded as one SOB having the data structure described above, and in reproducing, contents are reproduced from an optical recording medium 700 on which data having the structure explained referring to Figures 4 through 6, are recorded.

The buffer unit 71, in recording, receives content stream data from the outside, and outputs the content stream data at an appropriate speed by buffering the content stream data based on clock values provided from the clock generating unit 72, and in reproducing, outputs content stream data at an appropriate speed by buffering the content stream data based on clock values provided from the clock generating unit 72.

The SOBU generating unit 73 generates SOBUs by packing content stream data. The SOBU analyzing unit 74 extracts content stream data forming contents by analyzing SOBUs.

The recording/reading unit 75, in recording, records SOBUs and search information such as a mapping list on the optical recording medium 700 based on the control of the control unit 76 and content stream data packed in SOBUs, and in reproducing, reads search information, including a mapping list, or SOBUs recorded on the optical recording medium 700 at the request of the control unit 76.

The control unit 76, in recording, generates a mapping list and provides the mapping list to the recording/reading unit 75 and controls the entire recording and reproducing apparatus 7 so that content stream data is recorded on the optical recording medium 700, and in reproducing, decodes various control information, including the mapping list, and controls the entire recording and reproducing apparatus 7 so that contents recorded on the optical recording medium 700 can be reproduced.

The recording method and reproducing method of the recording and reproducing apparatus 7 having the structure described above are the same as those of the above-described recording apparatus 5 and reproducing apparatus 6, respectively.

According to the methods and apparatuses described above, the IAPAT values of all SOBUs can be correctly obtained, and therefore, program searching referring to a mapping list can be smoothly performed without an error.

Although a few preferred embodiments have been shown and described, it will be appreciated by those skilled in the art that various changes and modifications might be made without departing from the scope of the invention, as defined in the appended claims.

**Claims**

1.  A recording medium on which content stream data is recorded as a stream object (SOB) formed of a plurality of units for recording (SOBU), each of which units for recording (SOBU) has a predetermined size and comprises one or more stream packs (S_PCK), each of which stream packs (S_PCK) contains an application time stamp (ATS) for indicating reproducing time information and a plurality of application packets (AP_PKT) in which the content stream data is packed;

    wherein:

    each application packet (AP_PKT) is sized to satisfy the following relation:

$$\mathtt{AP\_PKT\_SZ \le SPayload\_SZ \times [SOBU\_SZ] - [N\_AHE + N\_SByte + ATS\_SZ],}$$

    where AP_PKT_SZ denotes the size of each application packet, SOBU_SZ denotes the size of a corresponding unit for recording, ATS_SZ denotes the size of an application time stamp which is formed in units of bytes, SPayload_SZ denotes the size of data space for containing information, excluding a fixed header area from the stream pack, N_AHE denotes the number of application header extensions of said corresponding unit for recording, and N_SByte denotes the number of stuffing bytes of said corresponding unit for recording,

    such that each of the units for recording (SOBU#1...#M-1), excluding the last unit for recording (SOBU#M), has at least one entire application time stamp (ATS) .

2.  The recording medium of claim 1, wherein the size of each application packet AP_PKT_SZ satisfies the following relation:

$$\mathtt{AP\_PKT\_SZ \le 2018 * [SOBU\_SZ] - 6,}$$

    where, SOBU_SZ denotes the size of said corresponding unit for recording.

3.  The recording medium of claim 1 or 2, wherein when N_SByte is 0, the size of the application packet satisfies the following relation:

$$\mathtt{AP\_PKT\_SZ \le 2018 \times [SOBU\_SZ] - 5,}$$

where, SOBU_SZ denotes the size of said corresponding unit for recording.

4. The recording medium of any preceding claim, further comprising a MAPping List (MAPL) having an Incremental Application Packet Arrival Time (IAPAT) indicating the duration of a corresponding unit for recording, as search information for indicating which unit for recording (SOBU) is included in a corresponding stream object (SOB).

5. The recording medium of any preceding claim, wherein a unit for recording (SOBU#M) having no application time stamp (ATS), among the units for recording (SOBU#1...M), comprises a predetermined application time stamp (ATS#N+1 (301,400)) for correction which is recorded contiguously after a last stream pack (S_PCK).

6. The recording medium of claim 5, wherein the predetermined application time stamp (ATS#N+1) is recorded as an application time stamp (301) within a stuffing packet (300) together with a stuffing payload (302) contiguously after a last application packet (AP_PKT#N).

7. The recording medium of claim 5 or 6, wherein the predetermined application time stamp (ATS#N+1 (301,400)) has a value obtained by adding an integer to the application time stamp (ATS#N) of the last stream pack (S_PCK).

8. A recording apparatus for recording a stream object (SOB) formed with a plurality of units for recording (SOBU) having one or more stream packs (S_PCK), each stream pack including a plurality of application packets (AP_PKT) in each of which an application time stamp (ATS) and content stream data are packed, the recording apparatus comprising:

   a clock generation unit (52) which generates a clock value;
   a buffer unit (51) for buffering input content stream data, adding the clock value provided by the clock generation unit (52) to the input content stream data, and outputting the result at an appropriate speed;
   a Stream OBject Unit (SOBU) generating unit (53) for packing the content stream data output from the buffer unit (51) and generating the units for recording (SOBU);
   a control unit (56) which generates a mapping list (MAPL) as search information with respect to the generated units for recording (SOBU);
   a recording unit (55) for recording the generated units for recording (SOBU) and the mapping list (MAPL);

   wherein:

   the stream object generating unit (53) forms each of the plurality of application packets (AP_PKT) to have a size to satisfy the following relation:

$$AP\_PKT\_SZ \leq SPayload\_SZ \times [SOBU\_SZ] - [N\_AHE + N\_SByte + ATS\_SZ],$$

   where, AP_PKT_SZ denotes the size of the application packet, SOBU_SZ denotes the size of a corresponding unit for recording, ATS_SZ denotes the size of an application time stamp which is formed in units of a byte, SPayload_SZ denotes the size of data space for containing information, excluding a fixed header area from the stream pack, N_AHE denotes the number of application header extensions of said corresponding unit for recording, and N_SByte denotes the number of stuffing bytes of said corresponding unit for recording,
   such that each of the units for recording (SOBU#1...M), excluding the last unit for recording (SOBU#M), includes at least one entire application time stamp (ATS).

9. The recording apparatus of claim 8, wherein the size of the application packet AP_PKT_SZ satisfies the following relation:

$$AP\_PKT\_SZ \leq 2018 \times [SOBU\_SZ] - 6$$

where, SOBU_SZ denotes the size of said corresponding unit for recording.

**10.** The recording apparatus of claim 8 or 9, wherein when N_SByte is 0, the size of the application packet satisfies the following relation:

$$AP\_PKT\_SZ \leq 2018 \times [SOBU\_SZ] - 5,$$

where, SOBU_SZ denotes the size of the unit for recording.

**11.** The recording apparatus of any of claims 8 to 10, wherein the mapping list (MAPL) includes an Incremental Application Packet Arrival Time (IAPAT) indicating the duration of a corresponding unit for recording, as search information for indicating which unit for recording (SOBU) is included in a corresponding Stream OBject (SOB).

**12.** The recording apparatus of any of claims 8 to 11, wherein the stream object generating unit (53) generates the units for recording (SOBU) such that a unit for recording (SOBU#M) having no application time stamp (ATS) comprises a predetermined application time stamp (ATS#N+1 (301,400)) for correction which is recorded contiguously after a last stream pack (S_PCK#N).

**13.** The recording apparatus of claim 12, wherein the predetermined application time stamp (ATS#N+1) is recorded as an application time stamp (301) within a stuffing packet (300) together with a stuffing payload (302), contiguously after a last application packet (AP_PKT#N).

**14.** The recording apparatus of claim 12 or 13, wherein the predetermined application time stamp (ATS#N+1 (301,400)) has a value obtained by adding an integer to the application time stamp (ATS#N) of the last stream pack (S_PCK#N).

**15.** A reproducing apparatus for reproducing data on a recording medium on which a stream object (SOB) formed with a plurality of units for recording (SOBU) having one or more stream packs (S_PCK), each stream pack (S_PCK) including an application packet (AP_PKT) in which an application time stamp (ATS) and content stream data are packed, and a mapping list (MAPL) as search information are recorded, the reproducing apparatus comprising:

a reading unit (65) for reading the mapping list (MAPL); and
a control unit (66) for searching for a last corresponding unit for recording (SOBU#M) in the stream object (SOB), referring to generated search information in the mapping list (MAPL), by regarding a value which is obtained by adding an integer to the value of the application time stamp (ATS#N) of the last stream pack (S_PCK#N) of the stream object (SOB) to comprise an application time stamp as the value of the application time stamp (ATS#N+1) for the last unit for recording (SOBU#M) in the stream object (SOB).

**16.** The reproducing apparatus of claim 15, wherein the search information includes an Incremental Application Packet Arrival Time (IAPAT).

**17.** The reproducing apparatus of claim 15 or 16, wherein the reading unit (65) comprises:

a Stream OBject Unit (SOBU) interpreting unit (64) which reads the units for recording (SOBU), interpreting the read units for recording (SOBU), and outputting the content stream data;
a clock generating unit (62) which generates a clock value; and
a buffer unit (61) which buffers content stream data provided by the SOBU interpreting unit (64), based on the clock value provided by the clock generating unit (62), and outputting the content stream data at an appropriate speed.

**Patentansprüche**

**1.** Aufzeichnungsmedium, auf dem Inhalts-Stream-Daten als ein Stream-Objekt (SOB) aufgezeichnet werden, das von einer Vielzahl von Einheiten zum Aufzeichnen (SOBU) gebildet wird, wobei jede der Einheiten zum Aufzeichnen (SOBU) eine vorgegebene Größe hat und einen oder mehrere Stream-Sätze (S_PCK) umfasst und jeder der Stream-Sätze (S_PCK) einen Anwendungs-Zeitstempel (ATS), der Wiedergabezeitinformationen anzeigt, sowie eine Vielzahl von Anwendungspaketen (AP_PKT) enthält, in die die Inhalts-Stream-Daten gepackt sind;

wobei:

jedes Anwendungspaket (AP_PKT) so dimensioniert ist, dass es die folgende Beziehung erfüllt:

$$AP\_PKT\_SZ \leq SPayload\_SZ \times [SOBU\_SZ] - [N\_AHE + N\_SByte + ATS\_SZ],$$

wobei AT_PKT_SZ die Größe jedes Anwendungspaketes bezeichnet, SOBU_SZ die Größe einer entsprechenden Einheit zum Aufzeichnen bezeichnet, ATS_SZ die Größe eines Anwendungs-Zeitstempels bezeichnet, der in Einheiten von Bytes ausgebildet ist, SPayload_SZ die Größe des Datenraums zur Aufnahme von Informationen außer einem festen Headerbereich aus dem Stream-Satz bezeichnet, N_AHE die Anzahl von Anwendungs-Headererweiterungen der entsprechenden Einheit zum Aufzeichnen bezeichnet und N_SByte die Anzahl von Füllbytes der entsprechenden Einheit zum Aufzeichnen bezeichnet,
so dass jede der Einheiten zum Aufzeichnen (SOBU#1...#M-1) außer der letzten Einheit zum Aufzeichnen (SOBU#M) wenigstens einen vollständigen Anwendungs-Zeitstempel (ATS) hat.

2. Aufzeichnungsmedium nach Anspruch 1, wobei die Größe jedes Anwendungspaketes AP_PKT_SZ die folgende Beziehung erfüllt:

$$AP\_PKT\_SZ \leq 2018^{*} [SOBU\_SZ] - 6,$$

wobei SOBU_SZ die Größe der entsprechenden Einheit zum Aufzeichnen bezeichnet.

3. Aufzeichnungsmedium nach Anspruch 1 oder 2, wobei, wenn N_SByte 0 ist, die Größe des Anwendungspaketes die folgende Beziehung erfüllt:

$$AP\_PKT\_SZ \leq 2018 \times [SOBU\_SZ] - 5,$$

wobei SOBU_SZ die Größe der entsprechenden Einheit zum Aufzeichnen bezeichnet.

4. Aufzeichnungsmedium nach einem der vorangehenden Ansprüche, die des Weiteren eine Mapping-Liste (MAPL), die eine inkrementale Anwendungspaket-Ankunftszeit (IAPAT) hat, die die Dauer einer entsprechenden Einheit zum Aufzeichnen anzeigt, als Suchinformationen umfasst, die anzeigen, welche Einheit zum Aufzeichnen (SOBU) in einem entsprechenden Stream-Objekt (SOB) enthalten ist.

5. Aufzeichnungsmedium nach einem der vorangehenden Ansprüche, wobei eine Einheit zum Aufzeichnen (SOBU#M) unter den Einheiten zum Aufzeichnen (SOBU#1...M), die keinen Anwendungs-Zeitstempel (ATS) hat, einen vorgegebenen Anwendungs-Zeitstempel (ATS#N+1 (301, 400)) zur Korrektur umfasst, der fortlaufend nach einem letzten Stream-Satz (S_PCK) aufgezeichnet ist.

6. Aufzeichnungsmedium nach Anspruch 5, wobei der vorgegebene Anwendungs-Zeitstempel (ATS#N+1) als ein Anwendungs-Zeitstempel (301) in einem Füllpaket (300) zusammen mit Füll-Nutzinformationen (302) fortlaufend nach einem letzten Anwendungspaket (AP_PKT#N) aufgezeichnet ist.

7. Aufzeichnungsmedium nach Anspruch 5 oder 6, wobei der vorgegebene Anwendungs-Zeitstempel (ATS#N+1 (301, 400)) einen Wert hat, der ermittelt wird, indem eine ganze Zahl zu dem Anwendungs-Zeitstempel (ATS#N) des letzten Stream-Satzes (S_PCK) addiert wird.

8. Aufzeichnungsvorrichtung zum Aufzeichnen eines Stream-Objektes (SOB), das von einer Vielzahl von Einheiten zum Aufzeichnen (SOBU) mit einem oder mehreren Stream-Sätzen (S_PCK) gebildet wird, wobei jeder Stream-Satz eine Vielzahl von Anwendungspaketen (AP_PKT) enthält, in die jeweils ein Anwendungs-Zeitstempel (ATS) und Inhalts-Stream-Daten gepackt sind, und die Aufzeichnungsvorrichtung umfasst:

eine Takterzeugungseinheit (52), die einen Taktwert erzeugt;

eine Puffereinheit (51), die eingegebene Inhalts-Stream-Daten puffert, den durch die Takterzeugungseinheit (52) bereitgestellten Taktwert zu den eingegebenen Inhalts-Stream-Daten addiert und das Ergebnis mit einer geeigneten Geschwindigkeit ausgibt;

eine Einheit (53) zum Erzeugen von Stream-Objekt-Einheiten (SOBU), die die von der Puffereinheit (51) ausgegebenen Inhalts-Stream-Daten packt und die Einheiten zum Aufzeichnen (SOBU) erzeugt;

eine Steuereinheit (56), die eine Mapping-Liste (MAPL) als Suchinformationen bezüglich der erzeugten Einheiten zum Aufzeichnen (SOBU) erzeugt;

eine Aufzeichnungseinheit (55), die die erzeugten Einheiten zum Aufzeichnen (SOBU) und die Mapping-Liste (MAPL) aufzeichnet;

wobei

die Einheit zum Erzeugen von Stream-Objektes (53) jedes der Vielzahl von Anwendungspaketen (AP_PKT) so ausbildet, dass es eine Größe hat, die die folgende Beziehung erfüllt:

$$AP\_PKT\_SZ \leq SPayload\_SZ \times [SOBU\_SZ] - [N\_AHE + N\_SByte + ATS\_SZ],$$

wobei AP_PKT_SZ die Größe des Anwendungspaketes bezeichnet, SOBU_SZ die Größe einer entsprechenden Einheit zum Aufzeichnen bezeichnet, ATS_SZ die Größe eines Anwendungs-Zeitstempels bezeichnet, der in Einheiten eines Byte ausgebildet ist, SPayload_SZ die Größe des Datenraums zum Aufnehmen von Informationen außer einem festen Headerbereich aus dem Stream-Satz bezeichnet, N_AHE die Anzahl von Anwendungs-Headererweiterungen der entsprechenden Einheit zum Aufzeichnen bezeichnet, und N_SByte die Anzahl von Füllbytes der entsprechenden Einheit zum Aufzeichnen bezeichnet,

so dass jede der Einheiten zum Aufzeichnen (SOBU#1...M) außer der letzten Einheit zum Aufzeichnen (SOBU#M) wenigstens einen vollständigen Anwendungs-Zeitstempel (ATS) enthält.

9. Aufzeichnungsvorrichtung nach Anspruch 8, wobei die Größe des Anwendungspaketes AP_PKT_SZ die folgende Beziehung erfüllt:

$$AP\_PKT\_SZ \leq 2018 \times [SOBU\_SZ] - 6,$$

wobei SOBU_SZ die Größe der entsprechenden Einheit zum Aufzeichnen bezeichnet.

10. Aufzeichnungsvorrichtung nach Anspruch 8 oder 9, wobei, wenn N_SByte 0 ist, die Größe des Anwendungspaketes die folgende Beziehung erfüllt:

$$AP\_PKT\_SZ \leq 2018 \times [SOBU\_SZ] - 5,$$

wobei SOBU_SZ die Größe der Einheit zum Aufzeichnen bezeichnet.

11. Aufzeichnungsvorrichtung nach einem der Ansprüche 8 bis 10. wobei die Mapping-Liste (MAPL) eine inkrementale Anwendungspaket-Ankunftszeit (IAPAT), die die Dauer einer entsprechenden Einheit zum Aufzeichnen anzeigt, als Suchinformationen enthält, die anzeigen, welche Einheit zum Aufzeichnen (SOBU) in einem entsprechenden Stream-Objekt (SOB) enthalten ist.

12. Aufzeichnungsvorrichtung nach einem der Ansprüche 8 bis 11, wobei die Einheit (53) zum Erzeugen von Stream-Objekten die Einheiten zum Aufzeichnen (SOBU) so erzeugt, dass eine Einheit zum Aufzeichnen (SOBU#M), die keinen Zeitstempel (ATS) hat, einen vorgegebenen Anwendungs-Zeitstempel (ATS#N+1 (301, 400)) zur Korrektur umfasst, der fortlaufend nach einem letzten Stream-Satz (S_PCK#N) aufgezeichnet ist.

**13.** Aufzeichnungsvorrichtung nach Anspruch 12, wobei der vorgegebene Anwendungs-Zeitstempel (ATS#N+1) als ein Anwendungs-Zeitstempel (301) mit einem Füllpaket (300) zusammen mit Füll-Nutzinformationen (302) fortlaufend nach einem letzten Anwendungspaket (AP_PKT#N) aufgezeichnet ist.

**14.** Aufzeichnungsvorrichtung nach Anspruch 12 oder 13, wobei der vorgegebene Anwendungs-Zeitstempel (ATS#N+1 (301,400)) einen Wert hat, der ermittelt wird, indem eine ganze Zahl zu dem Anwendungs-Zeitstempel (ATS#N) des letzten Stream-Satzes S_PCK#N) addiert wird.

**15.** Aufzeichnungsvorrichtung zum Aufzeichnen von Daten auf einem Aufzeichnungsmedium, auf dem ein Stream-Objekt (SOB), das von einer Vielzahl von Einheiten zum Aufzeichnen (SOBU) mit einem oder mehreren Stream-Sätzen (S_PCK) gebildet wird, wobei jeder Stream-Satz (S_PCK) ein Anwendungspaket (AP_PKT) enthält, in das ein Anwendungs-Zeitstempel (ATS) und Inhalts-Stream-Daten gepackt sind, und eine Mapping-Liste (MAPL) als Suchinformationen aufgezeichnet sind, wobei die Aufzeichnungsvorrichtung umfasst:

> eine Leseeinheit (65), die die Mapping-Liste (MAPL) liest; und
> eine Steuereinheit (66), die nach wenigstens einer entsprechenden Einheit zum Aufzeichnen (SOBU#M) in dem Stream-Objekt (SOB) sucht, auf erzeugte Suchinformationen in der Mapping-Liste (MAPL) Bezug nimmt, indem ein Wert, der bestimmt wird, indem eine ganze Zahl zu dem Wert des Anwendungs-Zeitstempels (ATS#N) des letzten Stream-Satzes (S_PCK#N) des Stream-Objektes (SOB) addiert wird, so betrachtet wird, dass er einen Anwendungs-Zeitstempel als den Wert des Anwendungs-Zeitstempels (ATS#N+1) für die letzte Einheit zum Aufzeichnen (SOBU#M) in dem Stream-Objekt (SOB) umfasst.

**16.** Wiedergabevorrichtung nach Anspruch 15, wobei die Suchinformationen eine inkrementale Anwendungspaket-Ankunftszeit (IAPAT) enthalten.

**17.** Wiedergabevorrichtung nach Anspruch 15 oder 16, wobei die Leseeinheit (65) umfasst:

> eine Einheit (64) zum Interpretieren einer Stream-Objekt-Einheit (SOBU), die die Einheiten zum Aufzeichnen (SOBU) liest, die gelesenen Einheiten zum Aufzeichnen (SOBU) interpretiert und die Inhalts-Stream-Daten ausgibt;
> eine Takterzeugungseinheit (62), die einen Taktwert erzeugt; und
> eine Puffereinheit (61), die Inhalts-Stream-Daten, die durch die Einheit (64) zum Interpretieren der SOBU bereitgestellt werden, auf Basis des durch die Takterzeugungseinheit (62) bereitgestellten Taktwertes puffert und die Inhalts-Stream-Daten mit einer geeigneten Geschwindigkeit ausgibt.

## Revendications

**1.** Support d'enregistrement sur lequel des données de flux de contenu sont enregistrées en tant qu'objet de flux (SOB) formé d'une pluralité d'unités d'enregistrement (SOBU), chacune des unités d'enregistrement (SOBU a une taille prédéterminée et comporte un ou plusieurs paquets de flux (S_PCK), chacun des paquets de flux (S_PCK) contient une estampille temporelle d'application (ATS) pour indiquer des informations de temps de reproduction et une pluralité de paquets d'application (AP_PKT) dans lesquels les données de flux de contenu sont comprimées, dans lequel :

> chaque paquet d'application (AP_PKT) est dimensionné pour satisfaire à la relation suivante :

$$\text{AP\_PKT\_SZ} \leq \text{SDonnées utiles\_SZ} \times [\text{SOBU\_SZ}] - [\text{N\_AHE} + \text{N\_SOctet} + \text{ATS\_SZ}],$$

où AP_PKT_SZ désigne la taille de chaque paquet d'application, SOBU_SZ désigne la taille d'une unité d'enregistrement correspondante, ATS_SZ désigne la taille d'une estampille temporelle d'application qui est formée en unités d'octets, SDonnées utiles_SZ désigne la taille d'espace de données pour contenir des informations, excluant une zone d'en-tête fixe du paquet de flux, N_AHE désigne le nombre d'extensions d'en-tête d'application de ladite unité d'enregistrement correspondante, et N_SOctet désigne le nombre d'octets de remplissage de ladite unité d'enregistrement correspondante,

de sorte que chacune des unités d'enregistrement (SOBU#1...#M-1), à l'exclusion de la dernière unité d'enregistrement (SOBU#M) a au moins une estampille temporelle d'application entière (ATS).

**2.** Support d'enregistrement selon la revendication 1, dans lequel la taille de chaque paquet d'application AP_PKT_SZ satisfait à la relation suivante :

$$\mathtt{AP\_PKT\_SZ} \leq \mathtt{2018*[SOBU\_SZ]-6,}$$

où, SOBU_SZ désigne la taille de ladite unité d'enregistrement correspondante.

**3.** Support d'enregistrement selon la revendication 1 ou 2, dans lequel lorsque N_SOctet est égal à 0, la taille du paquet d'application satisfait à la relation suivante :

$$\mathtt{AP\_PKT\_SZ} \leq \mathtt{2018 \times [SOBU\_SZ]-5,}$$

où, SOBU_SZ désigne la taille de ladite unité d'enregistrement correspondante.

**4.** Support d'enregistrement selon l'une quelconque des revendications précédentes, comportant en outre une Liste de Mise en Correspondance (MAPL) ayant un Instant d'Arrivée de Paquet d'Application Incrémentiel (IAPAT) indiquant la durée d'une unité d'enregistrement correspondante, en tant qu'informations de recherche pour indiquer quelle unité d'enregistrement (SOBU) est incluse dans un objet de flux correspondant (SOB).

**5.** Support d'enregistrement selon l'une quelconque des revendications précédentes, dans lequel une unité d'enregistrement (SOBU#M) n'ayant pas d'estampille temporelle d'application (ATS), parmi les unités d'enregistrement (SOBU#1...M), comporte une estampille temporelle d'application prédéterminée (ATS#N+1 (301 400)) pour correction qui est enregistrée de manière contiguë après un dernier paquet de flux (S_PCK).

**6.** Support d'enregistrement selon la revendication 5, dans lequel l'estampille temporelle d'application prédéterminée (ATS#N+1) est enregistrée en tant qu'estampille temporelle d'application (301) dans un paquet de remplissage (300) conjointement avec des données utiles de remplissage (302) de manière contiguë après un dernier paquet d'application (AP_PKT#N).

**7.** Support d'enregistrement selon la revendication 5 ou 6, dans lequel l'estampille temporelle d'application prédéterminée (ATS#N+1 (301 400)) a une valeur obtenue en ajoutant un nombre entier à l'estampille temporelle d'application (ATS#N) du dernier paquet de flux (S_PCK).

**8.** Dispositif d'enregistrement pour enregistrer un objet de flux (SOB) formé à l'aide d'une pluralité d'unités d'enregistrement (SOBU) ayant un ou plusieurs paquets de flux (S_PCK), chaque paquet de flux incluant une pluralité de paquets d'application (AP_PCK) dans chacun desquels une estampille temporelle d'application (ATS) et des données de flux de contenu sont comprimées, le dispositif d'enregistrement comportant :

une unité de génération d'horloge (52) qui génère une valeur d'horloge,
une unité de tampon (51) pour mettre en mémoire tampon des données de flux de contenu d'entrée, ajouter la valeur d'horloge délivrée par l'unité de génération d'horloge (52) aux données de flux de contenu d'entrée, et délivrer en sortie le résultat à une vitesse appropriée,
une unité de génération d'Unité d'OBjet de Flux (SOBU)- (53) pour comprimer les données de flux de contenu délivrées en sortie par l'unité de tampon (51) et générer les unités d'enregistrement (SOBU),
une unité de commande (56) qui génère une liste de mise en correspondance (MAPL) en tant qu'informations de recherche concernant les unités d'enregistrement (SOBU) générées,
une unité d'enregistrement (55) pour enregistrer les unités d'enregistrement (SOBU) générées et la liste de mise en correspondance (MAPL),

dans lequel :

l'unité de génération d'objet de flux (53) forme chaque paquet parmi la pluralité de paquets d'application (AP_PKT) afin qu'il ait une taille satisfaisant à la relation suivante :

$$AP\_PKT\_SZ \leq SDonnées\ utiles\_SZ \times [SOBU\_SZ] - [N\_AHE + N\_SOctet + ATS\_SZ],$$

où AP_PKT_SZ désigne la taille du paquet d'application, SOBU_SZ désigne la taille d'une unité d'enregistrement correspondante, ATS_SZ désigne la taille d'une estampille temporelle d'application qui est formée en unités d'un octet, SDonnées utiles_SZ désigne la taille d'espace de données pour contenir des informations, excluant une zone d'en-tête fixe du paquet de flux, N_AHE désigne le nombre d'extensions d'en-tête d'application de ladite unité d'enregistrement correspondante, et N_SOctet désigne le nombre de bits de remplissage de ladite unité d'enregistrement correspondante,

de sorte que chacune des unités d'enregistrement (SOBU#1...M), à l'exclusion de la dernière unité d'enregistrement (SOBU#M) inclut au moins une estampille temporelle d'application entière (ATS).

9. Dispositif d'enregistrement selon la revendication 8, dans lequel la taille du paquet d'application AP_PKT_SZ satisfait à la relation suivante :

$$AP\_PKT\_SZ \leq 2018 \times [SOBU\_SZ] - 6,$$

où, SOBU_SZ désigne la taille de ladite unité d'enregistrement correspondante.

10. Dispositif d'enregistrement selon la revendication 8 ou 9, dans lequel lorsque N_SOctet est égal à 0, la taille du paquet d'application satisfait à la relation suivante :

$$AP\_PKT\_SZ \leq 2018 \times [SOBU\_SZ] - 5,$$

où, SOBU_SZ désigne la taille de l'unité d'enregistrement.

11. Dispositif d'enregistrement selon l'une quelconque des revendications 8 à 10, dans lequel la liste de mise en correspondance (MAPL) inclut un Instant d'Arrivée de Paquet d'Application Incrémentiel (IAPAT) indiquant la durée d'une unité d'enregistrement correspondante, en tant qu'informations de recherche pour indiquer quelle unité d'enregistrement (SOBU) est incluse dans un OBjet de Flux correspondant (SOB).

12. Dispositif d'enregistrement selon l'une quelconque des revendications 8 à 11, dans lequel l'unité de génération d'objet de flux (53) génère les unités d'enregistrement (SOBU) de sorte qu'une unité d'enregistrement (SOBU#M) n'ayant pas d'estampille temporelle d'application (ATS), comporte une estampille temporelle d'application prédéterminée (ATS#N+1 (301 400)) pour correction qui est enregistrée de manière contiguë après un dernier paquet de flux (S_PCK#N).

13. Dispositif d'enregistrement selon la revendication 12, dans lequel l'estampille temporelle d'application prédéterminée (ATS#N+1) est enregistrée en tant qu'estampille temporelle d'application (301) dans un paquet de remplissage (300) conjointement avec des données utiles de remplissage (302), de manière contiguë après un dernier paquet d'application (AP_PKT#N).

14. Dispositif d'enregistrement selon la revendication 12 ou 13, dans lequel l'estampille temporelle d'application prédéterminée (ATS#N+1 (301 400)) a une valeur obtenue en ajoutant un nombre entier à l'estampille temporelle d'application (ATS#N) du dernier paquet de flux (S_PCK#N).

15. Dispositif de reproduction pour reproduire des donnés sur un support d'enregistrement sur lequel un objet de flux (SOB) est formé à l'aide d'une pluralité d'unités d'enregistrement (SOBU) ayant un ou plusieurs paquets de flux (S_PCK), chaque paquet de flux (S_PCK) incluant un paquet d'application (AP_PCK) dans lequel une estampille temporelle d'application (ATS) et des données de flux de contenu sont comprimées, et une liste de mise en correspondance (MAPL) en tant qu'informations d'enregistrement sont enregistrées, le dispositif de reproduction comportant :

une unité de lecture (65) pour lire la liste de mise en correspondance (MAPL), et

une unité de commande (66) pour rechercher une dernière unité d'enregistrement correspondante (SOBU#M) dans l'objet de flux (SOB), en se reportant aux informations de recherche générées dans la liste de mise en correspondance (MAPL), en considérant une valeur qui est obtenue en ajoutant un nombre entier à la valeur de l'estampille temporelle d'application (ATS#N) du dernier paquet de flux (S PCK#N) de l'objet de flux (SOB) pour comporter une estampille temporelle d'application en tant que valeur de l'estampille temporelle d'application (ATS#N+1) pour la dernière unité d'enregistrement (SOBU#M) dans l'objet de flux (SOB).

16. Dispositif de reproduction selon la revendication 15, dans lequel les informations de recherche incluent un instant d'Arrivée de Paquet d'Application Incrémentiel (IAPAT).

17. Dispositif de reproduction selon la revendication 15 ou 16, dans lequel l'unité de lecture (65) comporte :

une unité d'interprétation d'Unité d'OBjet de Flux (SOBU) (64) qui lit les unités d'enregistrement (SOBU) interprétant les unités d'enregistrement (SOBU) lues, et délivrant en sortie les données de flux de contenu,

une unité de génération d'horloge (62) qui génère une valeur d'horloge, et

une unité de tampon (61) qui met en mémoire tampon des données de flux de contenu délivrées par l'unité d'interprétation SOBU (64), sur la base de la valeur d'horloge délivrée par l'unité de génération d'horloge (62), et délivrant en sortie les données de flux de contenu à une vitesse appropriée.

# FIG. 1 (PRIOR ART)

# FIG. 2 (PRIOR ART)

END OF SOB ⟶

| ··· | SOBU #M−1 | SOBU #M |
|---|---|---|
| | | SOBU_SZ |
| ··· | ATS | AP_PKT | "0"s |

# FIG. 3 (PRIOR ART)

END OF SOB ⟶

| ··· | SOBU #M−1 | SOBU #M |
|---|---|---|
| | | SOBU_SZ |
| ··· | ATS | AP_PKT | ATS (COPY) |

IAPAT(M−1)=0    IAPAT(M)=0

# FIG. 4

END OF SOB ──▶

| SOBU #M−1 | | SOBU #M |
|---|---|---|

| | ATS#N | AP_PKT#N | STUFFING PACKET ⟋300 |
|---|---|---|---|

| ATS#N+1 | PAYLOAD |
|---|---|
| 301 | 302 |

# FIG. 5

END OF SOB ──▶

| SOBU #M−1 | | SOBU #M |
|---|---|---|

| | ATS#N | AP_PKT#N | ATS#N+1 |
|---|---|---|---|

400

# FIG. 6

# FIG. 7

USER INPUT →

66 — CONTROL UNIT

62 — CLOCK GENERATING UNIT

64 — SOBU ANALYZING UNIT

61 — BUFFER UNIT → OUTPUT STREAM

65 — READING UNIT

600

6

# FIG. 8

USER INPUT

**7**

**76**
CONTROL
UNIT

**72**
CLOCK
GENERATING
UNIT

**71**
INPUT
STREAM → BUFFER
UNIT → OUTPUT
STREAM

**73**
SOBU
GENERATING
UNIT

**74**
SOBU
ANALYZING
UNIT

**75**
RECORDING/READING
UNIT

**700**